(19) Europäisches Patentamt / European Patent Office / Office européen des brevets

(11) **EP 1 746 495 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(51) Int Cl.:
***G06F 7/72*** *(2006.01)*

(21) Anmeldenummer: 06013333.7

(22) Anmeldetag: **28.06.2006**

(54) **Verwendung eines Koprozessors zur modularen Inversion**

Use of a coprocessor for modular inversion

Utilisation d'un coprocesseur destiné à l'inversion modulaire

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.06.2005 DE 102005030286**

(43) Veröffentlichungstag der Anmeldung:
**24.01.2007 Patentblatt 2007/04**

(73) Patentinhaber: **Giesecke & Devrient GmbH**
**81677 München (DE)**

(72) Erfinder: **Seysen, Martin, Dr.**
**80809 München (DE)**

(56) Entgegenhaltungen:
**US-A- 5 961 578**

• **LENSTRA A K: "Computational Methods in Public Key Cryptology" INTERNET CITATION, [Online] 13. August 2001 (2001-08-13), XP002220915 Gefunden im Internet: URL:http://citeseer.nj.nec.com/cs> [gefunden am 2002-11-14]**
• **MARTIN SEYSEN: "Using an RSA Accelerator for Modular Inversion" CRYPTOGRAPHIC HARDWARE AND EMBEDDED SYSTEMS CHES 2005, LNCS 3659, September 2005 (2005-09), Seiten 226-236, XP019017433**

**Beschreibung**

Die Erfindung betrifft allgemein das technische Gebiet der Kryptographie und spezieller eine für kryptographische Zwecke vorgesehene Technik zur modularen Inversion unter Verwendung eines Koprozessors. Insbesondere ist die Erfindung zum Einsatz bei tragbaren Datenträgern vorgesehen, die z.B. als Chipkarten in unterschiedlichen Bauformen oder als Chipmodule ausgestaltet sein können.

Weil tragbare Datenträger kostengünstig und klein sein sollen, weisen sie in der Regel nur relativ geringe Rechenleistung und relativ wenig Speicherplatz auf. Andererseits werden tragbare Datenträger häufig für sicherheitskritische Anwendungen wie z.B. Finanztransaktionen oder elektronische Ausweisfunktionen eingesetzt. Daher ist es wünschenswert, in tragbaren Datenträgern sichere ("starke") kryptographische Verfahren auszuführen.

Eine Reihe von bekannten kryptographischen Verfahren mit öffentlichem Schlüssel - z.B. die unter den Namen RSA und Diffie-Hellman bekannten Verfahren - beinhalten Berechnungen in einer multiplikativen Gruppe mit einer großen ganzen Zahl als Modul. Um solche Verfahren effizient ausführen zu können, sind Mikrocontroller entworfen worden, die neben dem eigentlichen Prozessorkern einen kryptographischen Koprozessor aufweisen. Derartige Koprozessoren sind in der Regel für modulare Ganzzahl-Multiplikationen mit Bitlängen von ungefähr 512 Bit bis 1024 Bit optimiert. Das US-Patent 5,961,578 zeigt beispielhaft einen solchen Mikrocontroller.

Eine neuere Entwicklung ist die Verwendung kryptographischer Verfahren, die auf elliptischen Kurven beruhen ("EC-Verfahren"). Im Gegensatz zu dem oben genannten RSA-Verfahren benötigen EC-Verfahren erheblich geringere Schlüssel-Bitlängen von typischerweise 160 Bit bis 256 Bit. Jedoch spielen bei EC-Verfahren andere Operationen als die modulare Multiplikation, nämlich insbesondere die modulare Addition, Subtraktion und Inversion, eine erhebliche Rolle.

Die Gesamtlaufzeit des EC-Verfahrens wird insbesondere durch die erforderlichen modularen Inversionen beeinflußt. Wenn eine modulare Inversion nicht mit Unterstützung eines Koprozessors ausgeführt wird, kann sie beispielsweise um den Faktor 100 mehr Zeit benötigen als eine modulare Multiplikation. So werden z.B. bei dem bekannten ECDSA-Signaturverfahren mit einer Schlüssel-Bitlänge von 160 Bit bis 192 Bit ungefähr 20 % der Laufzeit für modulare Inversionen verwendet. Jede Beschleunigung der modularen Inversionen wirkt sich daher in spürbarem Maße auf die Gesamtlaufzeit des ECDSA-Signaturverfahrens und anderer EC-Verfahren aus.

Es besteht somit ein Bedürfnis nach einem effizienten Verfahren zur modularen Inversion. Insbesondere besteht ein Bedürfnis, an sich bekannte Koprozessoren auf effiziente Weise zur modularen Inversion einzusetzen.

Ein bekanntes und oft verwendetes Verfahren zur modularen Inversion ist das erweiterte euklidische Verfahren, das auf dem bereits von Euklid vorgeschlagenen Verfahren zur Bestimmung des größten gemeinsamen Teilers (gcd = *greatest common divisor*) zweier Eingabewerte $u, v$ beruht. Durch zusätzliche Operation werden bei dem erweiterten euklidischen Verfahren zusätzlich zu dem Wert $\gcd(u, v)$ auch die Koeffizienten $\lambda, \mu$ einer Linearkombination der Eingabewerte $u, v$ mit $\lambda u - \mu v = \gcd(u, v)$ und $|\lambda| < v$ bestimmt. Da ein modulares Inverses $u^{-1}$ des Wertes $u$ mit dem Modul $v$ nur für $\gcd(u, v) = 1$ existiert, gilt $\lambda u - \mu v = 1$ und somit $u^{-1} = \lambda \pmod v$ für den durch das erweiterte euklidische Verfahren berechneten Koeffizienten $\lambda$.

Das nicht-erweiterte euklidische Verfahren und das erweiterte euklidische Verfahren sind als Algorithmen A und X auf den Seiten 334 - 343 des Buches "The Art of Computer Programming" von D. E. Knuth, Band 2, 3. Auflage, Addison-Wesley, 1997, beschrieben. Wegen der erforderlichen Zusatzoperationen ist der für das erweiterte euklidische Verfahren benötigte Rechenaufwand deutlich höher als der Aufwand für das nicht-erweiterte euklidische Verfahren. Es ist daher wünschenswert, ein Verfahren zur modularen Inversion bereitzustellen, das zumindest für manche Anwendungsfälle weniger Rechenzeit als das erweiterte euklidische Verfahren benötigt.

Die Erfindung hat daher die Aufgabe, eine Technik zur modularen Inversion vorzuschlagen, durch die ein Koprozessor auf besonders günstige Weise genutzt werden kann.

Erfindungsgemäß wird diese Aufgabe ganz oder zum Teil gelöst durch ein Verfahren mit den Merkmalen des Anspruchs 1, ein Computerprogrammprodukt gemäß Anspruch 6 und einen tragbaren Datenträger gemäß Anspruch 7. Die abhängigen Ansprüche definieren optionale Merkmale mancher Ausgestaltungen der Erfindung.

Die Erfindung geht von der Grundidee aus, Verarbeitungsschritte eines nicht-erweiterten euklidischen Verfahrens mit Werten auszuführen, die eine größere Bitlänge als der zu invertierende Wert und/oder das Modul aufweisen und die deshalb hier als "erweiterte Werte" bezeichnet werden. Es ist eine überraschende Erkenntnis, dass sich in diesen erweiterten Werten Informationen mitführen lassen, aus denen schließlich das gewünschte Inverse leicht ermittelbar ist, auch wenn nicht das erweiterte euklidische Verfahren ausgeführt wird.

Allgemein wird durch die Erfindung die Bitlänge der Berechnungen vergrößert, aber die Anzahl der Rechenoperationen im Vergleich zu einem erweiterten euklidischen Verfahren reduziert. So kann sich beispielsweise in manchen Ausführungsformen der Erfindung die Anzahl der benötigten Operationen ungefähr halbieren, während sich die Bitlänge ungefähr verdoppelt. Bei Konstellationen wie den eingangs genannten - bei denen z.B. ein EC-Verfahren mit einer Schlüssel-Bitlänge von 160 Bit bis 256 Bit unter Verwendung eines Koprozessors ausgeführt werden soll, der für Berechnungen mit 512 Bit oder 1024 Bit ausgelegt ist - spielt die größere Bitlänge jedoch kaum eine Rolle, während die verringerte Anzahl von Operation zu einer ungefähr linearen Verringerung der Rechenzeit führt.

In manchen Ausgestaltungen sind in den erweiterten Werten die Informationen des Eingangswerts und/oder des Moduls in höhere Bitpositionen verschoben. Dies kann durch eine Multiplikation mit einem Erweiterungsfaktor geschehen, der seinerseits eine Zweierpotenz oder ein Vielfaches einer Zweierpotenz sein kann. Es versteht sich, dass diese Multiplikation auf effiziente Weise - z.B. durch eine Schiebeoperation - implementiert werden kann. Erfindungsgemäß enthält mindestens einer der erweiterten Werte ferner eine Störung an einer geringwertigen Bitposition. So kann z.B. das geringstwertige Bit des ersten erweiterten Werts gesetzt werden.

Die Verarbeitungsschritte entsprechen erfindungsgemäß den Verarbeitungsschritten eines euklidischen Verfahrens, z.B. eines nicht-erweiterten klassischen euklidischen Verfahrens oder eines euklidischen Verfahrens in der Ausgestaltung gemäß Lehmer. Dies heißt jedoch nicht notwendigerweise, dass die Verarbeitungsschritte gleich oft wie bei einem euklidischen Verfahren ausgeführt werden. In manchen Ausgestaltungen wird vielmehr das hier beschriebene Verfahren früher beendet, als dies bei dem üblichen euklidischen Verfahren der Fall wäre.

Erfindungsgemäß ist der Koprozessor für Ganzzahl-Berechnungen mit zumindest der vergrößerten- z.B. verdoppelten - Bitlänge optimiert. Dies kann beispielsweise dann der Fall sein, wenn der Koprozessor für RSA-Berechnungen oder ähnliche Verfahren ausgelegt ist und das erfindungsgemäße Verfahren für EC-Berechnungen genutzt wird.

Das erfindungsgemäße Computerprogrammprodukt weist Programmbefehle auf, um das erfindungsgemäße Verfahren zu implementieren. Ein derartiges Computerprogrammprodukt kann beispielsweise ein Halbleiterspeicher oder eine Diskette oder eine CD-ROM sein. Insbesondere kann ein derartiges Computerprogrammprodukt zur Verwendung bei der Herstellung oder Initialisierung von Chipkarten vorgesehen sein.

In bevorzugten Ausgestaltungen sind das Computerprogrammprodukt und/oder der tragbare Datenträger mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:

Fig. 1 ein Blockdiagramm mit Funktionseinheiten eines tragbaren Datenträgers nach einem Ausführungsbeispiel der Erfindung, und

Fig. 2 ein Ablaufdiagramm eines Verfahrens gemäß einem Ausführungsbeispiel der Erfindung in dem in Fig. 1 dargestellten Datenträger.

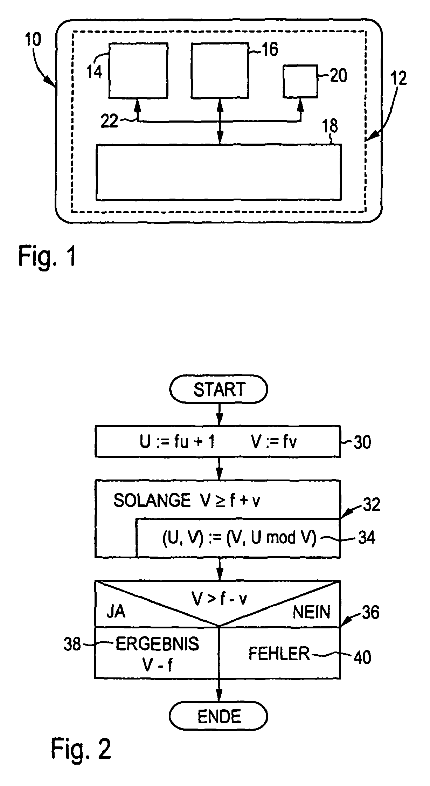

Der in Fig. 1 gezeigte Datenträger 10 weist einen Mikrocontroller 12 auf. In an sich bekannter Weise sind in dem Mikrocontroller 12 auf einem einzigen Halbleiterchip ein Prozessorkern 14, ein Koprozessor 16, ein Speicher 18 und eine Schnittstellenschaltung 20 integriert, die miteinander über einen Bus 22 verbunden sind. Während der Prozessorkern 14 zur allgemeinen Programmausführung eingerichtet ist, dient der Koprozessor 16 speziell zur Ausführung von Ganzzahl-Berechnungen mit langen Binärwerten. Der Speicher 18 ist in mehrere in unterschiedlichen Technologien ausgestaltete Speicherfelder - z.B. ROM, EEPROM und RAM - gegliedert. Unter anderem enthält der Speicher 18 Programmbefehle, die das im folgenden beschriebene Verfahren implementieren.

Der Mikrocontroller 12 ist als solcher bekannt; in manchen Ausgestaltungen kann z.B. der unter der Marke Infineon SLE66CX322P bekannte Mikrocontroller verwendet werden, der einen als *Advanced Crypto Engine* (ACE) bezeichneten Koprozessor 16 aufweist.

Fig. 2 veranschaulicht das Verfahren des vorliegenden Ausführungsbeispiels. Ausgehend von einem Eingangswert $u$ und einem Modul $v$ bestimmt das Verfahren das modulare Inverse $x$ von $u$ bezüglich des Moduls $v$ mit - v < x < v. Der Eingangswert $u$ und/oder der Modul $v$ können beispielsweise eine Bitlänge von 160 Bit oder 192 Bit oder 256 Bit haben. Solche Bitlängen sind für gegenwärtig eingesetzte EC-Verfahren - z.B. das ECDSA-Signaturverfahren - üblich.

Das Verfahren gemäß Fig. 2 beginnt in Schritt 30 damit, dass aus dem Eingangswert $u$ und dem Modul $v$ ein erster erweiterter Wert $U$ bzw. ein zweiter erweiterter Wert $V$ erzeugt werden. Die erweiterten Werte U und V ergeben sich aus den Werten $u$ und $v$ durch Multiplikation mit einem Erweiterungsfaktor $f$, der mehr als doppelt so groß wie der Modul $v$ ist. Ferner geht in die Berechnung des ersten erweiterten Wertes U eine kleine Störung - im vorliegenden Ausführungsbeispiel eine additive Störung mit dem Störungswert 1- ein.

Insgesamt werden durch Schritt 30 Informationen, die dem Eingangswert $u$ und dem Modul $v$ entsprechen, in höherwertige Bitstellen der erweiterten Werte U und V verschoben. Die geringerwertigen Bitstellen des zweiten erweiterten Wertes $V$ bleiben auf mehr als der Bitlänge des Moduls $v$ frei, während die geringstwertige Bitstelle des ersten erweiterten Wertes U mit dem Störungswert 1 belegt wird. Die geringerwertigen Bitstellen beider erweiterter Werte U und V dienen letztendlich zur Berechnung des modularen Inversen. Durch die oben angegebene Mindestgröße des Erweiterungsfaktors $f$ wird sichergestellt, dass in den erweiterten Werten $U$ und $V$ diejenigen Bitabschnitte, in denen sich die Informationen der Werte $u$ und $v$ befinden, und diejenigen Bitabschnitte, die zur Berechnung des Inversen verwendet werden und in denen sich anfänglich die Störung befindet, ausreichend weit voneinander entfernt sind.

In Schritt 32 wird eine Programmschleife mit Verarbeitungsschritten 34 ausgeführt, solange der zweite erweiterte Wert $V$ mindestens so groß wie $f + v$ ist. Die Verarbeitungsschritte 34 entsprechen genau dem nicht-erweiterten euklidischen Verfahren, indem bei jedem Schleifendurchlauf der zweite erweiterte Wert V durch U mod V und der erste erweiterte Wert U durch V ersetzt werden. Die Ausführungsbedingung $V \geq f + v$ der Programmschleife unterscheidet sich jedoch von der des euklidischen Verfahrens dahingehend, dass im vorliegenden Fall die Schleife früher beendet wird als bei dem euklidischen Verfahren.

Nach dem Ende der Programmschleife wird in Schritt 36 überprüft, ob der erste erweiterte Wert $V$ größer als $f - v$ ist. Ist dies der Fall, so wird in Schritt 38 die Differenz $V - f$ als Ergebnis, nämlich als modulares Inverses von $u$ bezüglich des Moduls $v$, ausgegeben. Andernfalls war der Eingangswert $u$ nicht teilerfremd zu dem Modul $v$, also nicht invertierbar. Es wird dann in Schritt 40 eine Fehlermeldung ausgegeben.

Zusammenfassend läßt sich das gerade beschriebene und in Fig. 2 gezeigte Verfahren zur modularen Inversion unter Verwendung des Koprozessors 16 in Pseudocode wie folgt definieren:

Eingaben:     Ganze Zahlen $u \geq 0$ und $v > 1$ sowie ein beliebiger Erweiterungsfaktor $f$ mit $f > 2v$

Ausgaben:     Modulares Inverses $x = u^{-1} \pmod{v}$ mit $-v < x < v$, oder Fehler, wenn $u$ und $v$ nicht teilerfremd sind

Verfahren:

$$\text{SETZE } U := fu + 1 \text{ ; } V := fv \qquad (1)$$

$$\text{SOLANGE } V \geq f + v \text{ FÜHRE AUS} \qquad (2)$$

$$\text{SETZE } T := V \text{ ; } V := U \bmod V \text{ ; } U := T \qquad (3)$$

$$\text{FALLS } V > f - v \qquad (4)$$

$$\text{DANN GIB ERGEBNIS } V - f \text{ AUS} \qquad (5)$$

$$\text{SONST GIB FEHLERMELDUNG AUS} \qquad (6)$$

Zeile (1) des obigen Pseudocodes entspricht Schritt 30 in Fig. 2. Die Zeilen (2) und (3) definieren die Schleife gemäß Schritt 32; hierbei wird in Zeile (3) eine Hilfsvariable T eingesetzt, um die Zuweisung gemäß den Verarbeitungsschritten 34 zu implementieren. Die Zeilen (4) bis (6) entsprechen der Fallunterscheidung von Schritt 36.

Im folgenden werden die Werte der Programmvariablen U und V vor Beginn der Schleife mit $U_0$ und $V_0$ bzw. nach dem ($i$+1)-ten Schleifendurchlauf mit $U_{i+1}$ und $V_{i+1}$ bezeichnet. Es gelten also die folgenden Beziehungen:

$U_0 = fu + 1$ und $V_0 = fv$
$U_{i+1} = V_i$ und $V_{i+1} = U_i \bmod V_i$ für $i \geq 0$

Wie bereits erwähnt, entspricht die Folge der $U_i$ und $V_i$ genau der Folge der Zwischenergebnisse, die man erhält, wenn das nicht-erweiterte euklidische Verfahren auf die Werte $f u + 1$ und $f v$ angewendet wird. Die Anzahl der Schleifendurchläufe - also die Anzahl der benötigten modularen Reduktionen - ist bei dem vorliegend beschriebenen Verfahren und bei dem auf die Werte $u$ und $v$ angewendeten euklidischen Verfahren ungefähr gleich.

Um die Funktionsweise des Verfahrens intuitiv zu erläutern, wird zunächst auf das erweiterte euklidische Verfahren verwiesen, das zu dem Eingangswert $u$ und dem Modul $v$ neben dem größten gemeinsamen Teiler gcd$(u, v)$ auch die Koeffizienten $\lambda$, $\mu$ einer Linearkombination mit $\lambda u - \mu v = $ gcd$(u, v)$ und $|\lambda| < v$ bestimmt. Wenn dieses erweiterte euklidische Verfahren auf $U' = f u$ und $V = f v$ statt auf $u$ und $v$ angewendet wird, ergeben sich genau die gleichen Zwischenergebnisse bei den modularen Reduktionen und schließlich eine Linearkombination $\lambda U' - \mu V = $ gcd$(U', V) = f \cdot$ gcd$(u, v)$ mit den gleichen Werten von $\lambda$ und $\mu$ wie oben.

Es wird nun das nicht-erweiterte euklidische Verfahren mit dem gestörten Eingangswert U = U' + 1 und dem Modul V betrachtet. Wenn angenommen wird, dass sich durch die geringfügige Störung die Zwischenergebnisse der modularen Reduktionen nur um einen multiplikativen Faktor f ändern, tritt im nicht-erweiterten euklidischen Verfahren nach einer Iterationsstufe $i$ der Rest $V_i = \lambda U - \mu V = f \cdot \gcd(u, v) + \lambda$ auf. Da $\gcd(u, v) = 1$ gilt, kann dann das modulare Inverse $\lambda$ einfach aus diesem Rest, der ungefähr die gleiche Größe wie $f$ aufweist, bestimmt werden.

Die gerade getroffene Annahme gilt zwar im allgemeinen nicht vollständig, aber in hinreichendem Maße. Formal ergibt sich die Korrektheit des Verfahrens aus der Tatsache, dass für $\gcd(u, v) = 1$ ein $i$ existiert, für das $V_{i-1} > 2f - v$ und $f + v > V_i > f - v$ und $(V_i - f) \cdot u = 1 \pmod v$ gelten. Wenn dagegen $\gcd(u, v) \neq 1$ ist, dann gilt für jedes $V_i$ entweder $V_i > 2f$ - $v$ oder $V_i \leq v$.

Der Erweiterungsfaktor $f$ kann prinzipiell beliebig gewählt werden, sofern er nur die oben genannte Mindestgröße $f > 2v$ aufweist. In manchen Ausgestaltungen kann der Erweiterungsfaktor $f$ eine Zweierpotenz sein, so dass die Multiplikation der Werte $u$ und $v$ mit dem Erweiterungsfaktor $f$ durch eine einfache Schiebeoperation implementiert werden kann. Im hier beschriebenen Ausführungsbeispiel wird der Erweiterungsfaktor $f$ jedoch als $f = 3 \cdot 2^k$ für eine ganze Zahl $k$ mit $2^k > v$ bestimmt. Es gelten dann die Ungleichungen $2f - v > 2^{k+2} > f + v$ und $f - v > 2^{k+1}$. Daher genügt es in den Schritten 32 und 36, die Bitlänge von $V$ zu überprüfen. Durch diese Maßnahme wird der Verwaltungsaufwand im Koprozessor 16 reduziert.

Die als Teil der Verarbeitungsschritte 34 ausgeführte modulare Reduktion U mod V kann durch jedes an sich bekannte Verfahren implementiert werden. Im vorliegend beschriebenen Ausführungsbeispiel wird eine Ganzzahl-Division ausgeführt, deren Rest das gewünschte Ergebnis darstellt. Als Divisionsverfahren wird ein einfaches binäres Subtrahiere-und-Korrigiere-Verfahren verwendet, wie es beispielsweise als Algorithmus D auf den Seiten 272 - 275 des bereits zitierten Buches von D. E. Knuth angegeben ist. Dieses Verfahren ist insbesondere dann geeignet, wenn der Koprozessor 16 Additionen, Subtraktionen und Verschiebeoperationen auf langen Ganzzahlen schnell auszuführen vermag.

In einer Ausführungsalternative kann das bislang beschriebene Verfahren dadurch abgewandelt werden, dass die von Lehmer vorgeschlagene Ausgestaltung des euklidischen Verfahrens verwendet wird. Diese Ausgestaltung, die besonders für große Zahlen geeignet ist, ist als Algorithmus L auf den Seiten 346 - 348 des bereits zitierten Buches von D. E. Knuth angegeben. Hier ergeben sich dieselben Quotienten wie bei dem oben beschriebenen, "klassischen" euklidischen Verfahren, so dass sich insgesamt der Berechnungsablauf nicht ändert.

In einer beispielhaften Implementierung wurde als Koprozessor 16 die *Advanced Crypto Engine* (ACE) des Infineon-SLE66CX322P-Mikrocontrollers verwendet. Dieser Koprozessor 16 führt die gängigen Grundoperationen - z.B. Addition, Subtraktion und bitweise Verschiebung - stets mit der vollen Registerbreite von 560 oder 1120 Bit aus. Die Implementierung ist für EC-Verfahren vorgesehen, bei denen Berechnungen mit Bitlängen von mehr als 512 Bit kaum auftreten. Auch wenn das hier beschriebene Verfahren ungefähr zu einer Verdopplung der Bitlängen der zu verarbeiteten Werte führt, spielt dies wegen der noch größeren Registerbreite des Koprozessors 16 kaum eine Rolle.

Das hier beschriebene Verfahren benötigt ungefähr die gleiche Anzahl von Operation wie ein nicht-erweitertes euklidisches Verfahren. Der sonst zur Ausführung eines erweiterten euklidischen Verfahrens erforderliche Mehraufwand wird somit vermieden. Die tatsächliche Einsparung hängt von der genauen Ausgestaltung des Koprozessors 16 und von der Einsparung bei der Ansteuerung des Koprozessors 16 (erforderliche *"glue instructions"*) ab. In der hier beispielhaft genannten Implementierung ergeben sich die folgenden Ablaufzeiten:

| Bitlänge des Moduls → | 160 Bit | 192 Bit | 256 Bit | 320 Bit |
|---|---|---|---|---|
| Erweitertes euklidisches Verfahren | 4,80 ms | 5,73 ms | 7,46 ms | 9,16 ms |
| Verfahren des vorliegenden Ausführungsbeispiels | 2,09 ms | 2,43 ms | 3,16 ms | 4,45 ms |

Insgesamt wurde somit durch das vorliegend beschriebene Verfahren die Geschwindigkeit der modularen Inversion bei Bitlängen, wie sie für EC-Verfahren typisch sind, mehr als verdoppelt.

Es versteht sich, daß die Einzelheiten der obigen Beschreibung nur als Beispiele für mögliche Ausgestaltungen der vorliegenden Erfindungen dienen sollen, wie diese durch die anhängenden Ansprüche definiert werden. Weitere Abwandlungen, insbesondere im Hinblick auf die Berechnung der erweiterten Werte, die ausgeführten Verarbeitungsschritte und die Ausführungsbedingung, sind möglich und für den Fachmann offensichtlich.

**Patentansprüche**

**1.** Verfahren zur Verwendung eines Koprozessors (16) zur Bestimmung des modularen Inversen $x$ eines Eingangswertes $u$ bezüglich eines Moduls $v$, wobei:

- aus dem Eingangswert $u$ derart ein erster erweiterter Wert $U$ mit einer gegenüber dem Eingangswert $u$ vergrößerten Bitlänge bestimmt wird, dass sich in einem Bitabschnitt des ersten erweiterten Werts $U$ die Informationen des Eingangswerts $u$ befinden, wobei das Bestimmen des ersten erweiterten Werts $U$ die Multiplikation des Eingangswertes $u$ mit einem Erweiterungsfaktor $f$ umfasst und wobei $f > 2v$ gilt,
- aus dem Modul $v$ derart ein zweiter erweiterter Wert $V$ mit einer gegenüber dem Modul $v$ vergrößerten Bitlänge bestimmt wird, dass sich in einem Bitabschnitt des zweiten erweiterten Werts $V$ die Informationen des Moduls $v$ befinden, wobei das Bestimmen des zweiten erweiterten Werts $V$ die Multiplikation des Moduls $v$ mit dem Erweiterungsfaktor $f$ umfasst,
- der Koprozessor (16) für Ganzzahl-Berechnungen mit zumindest der vergrößerten Bitlänge vorgesehen ist,
- mindestens einer der erweiterten Werte $U$, $V$ eine Störung an einer Bitposition enthält, die von denjenigen Bitpositionen, an denen sich die Informationen des Eingangswerts $u$ bzw. des Moduls $v$ befinden, beabstandet ist,
- ausgehend von den beiden erweiterten Werten $U$ und $V$ unter Verwendung des Koprozessors (16) Verarbeitungsschritte (34) eines euklidischen Verfahrens ausgeführt werden, solange eine vorgegebene Ausführungsbedingung erfüllt ist, und
- das modulare Inverse $x$ in Abhängigkeit von dem Ergebnis der ausgeführten Verarbeitungsschritte (34) bestimmt wird.

2. Verfahren gemäß Anspruch 1, **dadurch gekennzeichnet, dass** der Erweiterungsfaktor $f$ eine Zweierpotenz ist, so dass in den erweiterten Werten $U$, $V$ die Informationen des Eingangswerts $u$ und des Moduls $v$ in höhere Bitpositionen verschoben sind.

3. Verfahren gemäß Anspruch 1 oder 2, **dadurch gekennzeichnet, dass** die Verarbeitungsschritte (34) eine unter Verwendung des Koprozessors (16) ausgeführte modulare Reduktion beinhalten.

4. Verfahren gemäß einem der Ansprüche 1 bis 3, **dadurch gekennzeichnet, dass** die Verarbeitungsschritte (34), ausgehend von den beiden erweiterten Werten $U$ und $V$, einer Folge von Zuweisungen $(U, V) := (V, U \bmod V)$ entsprechen.

5. Verfahren nach einem der Ansprüche 1 bis 4, **dadurch gekennzeichnet, dass** das Verfahren für eine kryptographische Anwendung in einem tragbaren Datenträger (10), insbesondere für ein EC-Verfahren, vorgesehen ist.

6. Computerprogrammprodukt, das Programmbefehle aufweist, um einen Mikrocontroller (12) zu veranlassen, ein Verfahren mit den Merkmalen eines der Ansprüche 1 bis 5 auszuführen.

7. Tragbarer Datenträger (10), insbesondere Chipkarte oder Chipmodul, der zur Ausführung eines Verfahrens mit den Merkmalen eines der Ansprüche 1 bis 5 eingerichtet ist.

**Claims**

1. A method for using a coprocessor (16) for determining the modular inverse $x$ of an input value $u$ with respect to a module $v$, wherein:

- a first extended value $U$ having a bit length that is enlarged relative to the input value $u$ is determined from the input value $u$ in a way that the information of the input value $u$ is located in a bit section of the first extended value $U$, wherein the determining of the first extended value $U$ comprises the multiplication of the input value $u$ by an extension *factor f,* and wherein $f > 2v$ holds,
- a second extended value $V$ having a bit length that is enlarged relative to the module $v$ is determined from the module $v$ in a way that the information of the module $v$ is located in a bit section of the second extended value $V$, wherein the determining of the second extended value $V$ comprises the multiplication of the module $v$ by the extension factor $f$,
- the coprocessor (16) is provided for integer calculations having at least the enlarged bit length,
- at least one of the extended values $U$, $V$ comprises a disturbance at a bit position having a distance from those bit positions where the information of the input value $u$ and the module $v$, respectively, is located,
- processing steps (34) of a method according to Euklid are performed using the coprocessor (16), starting from the two extended values $U$ and $V$, as long as a predetermined execution condition is fulfilled, and
- the modular inverse x is determined depending on the result of the performed processing steps (34).

**2.** The method according to claim 1, **characterised in that** the extension factor *f* is a power of 2, so that the information of the input value *u* and the module **v** is shifted into higher bit positions in the extended values **U, V.**

**3.** The method according to claim 1 or 2, **characterised in that** the processing steps (34) comprise a modular reduction that is performed using the coprocessor (16).

**4.** The method according to any one of claims 1 to 3, **characterised in that** the processing steps (34) correspond to a sequence of assignments (*U, V*) :=(*V, U* mod *V*), starting from the two extended values **U** and **V.**

**5.** A method according to any one of claims 1 to 4, **characterised in that** the method is provided for a cryptographic application in a portable data carrier (10), in particular for an EC method.

**6.** Computer program product comprising program instructions for causing a microcontroller (12) to perform a method having the features of any one of claims 1 to 5.

**7.** Portable data carrier (10), in particular smart card or chip module, which is configured for performing a method having the features of any one of claims 1 to 5.

**Revendications**

**1.** Procédé pour l'utilisation d'un coprocesseur (16) afin de déterminer l'inverse modulaire *x* d'une valeur d'entrée *u* par rapport à un module *v,* dans lequel :

- une première valeur amplifiée *U* ayant une longueur binaire augmentée par rapport à la valeur d'entrée *u* est déterminée à partir de la valeur d'entrée *u* de telle manière que les informations de la valeur d'entrée *u* se trouvent dans une partie binaire de la première valeur amplifiée *U,* dans lequel la détermination de la première valeur amplifiée *U* comprend la multiplication de la valeur d'entrée *u* par un facteur d'amplification *f* et dans lequel *f* > 2*v*,
- une seconde valeur amplifiée *V* ayant une longueur binaire augmentée par rapport au module *v* est déterminée à partir du module *v* de telle manière que les informations du module *v* se trouvent dans une partie binaire de la seconde valeur amplifiée *V,* dans lequel la détermination de la seconde valeur amplifiée *V* comprend la multiplication du module *v* par le facteur d'amplification *f*,
- le coprocesseur (16) est prévu pour effectuer des calculs en nombres entiers en utilisant au moins la longueur binaire augmentée,
- au moins l'une des valeurs amplifiées *U, V* contient une perturbation à une position binaire qui est espacée des positions binaires sur lesquelles se trouvent les informations de la valeur d'entrée *u* ou du module *v*,
- des étapes de traitement (34) d'un processus euclidien sont exécutées à partir des deux valeurs amplifiées *U* et *V* au moyen du coprocesseur (16) tant qu'une condition d'exécution prédéterminée est satisfaite, et
- l'inverse modulaire *x* est déterminé en fonction du résultat des étapes de traitement exécutées (34).

**2.** Procédé selon la revendication 1, **caractérisé en ce que** le facteur d'amplification *f* est une puissance de deux de telle sorte que dans les valeurs amplifiées *U, V,* les informations de la valeur d'entrée *u* et du module v soient décalées à des positions binaires plus élevées.

**3.** Procédé selon la revendication 1 ou 2, **caractérisé en ce que** les étapes de traitement (34) comprennent une réduction modulaire mise en oeuvre par utilisation du coprocesseur (16).

**4.** Procédé selon l'une quelconque des revendications 1 à 3, **caractérisé en ce que** les étapes de traitement (34) correspondent à une série d'affectations (*U, V*) := (*V, U* mod *V*) à partir des deux valeurs amplifiées *U* et *V.*

**5.** Procédé selon l'une quelconque des revendications 1 à 4, **caractérisé en ce que** le procédé est prévu pour une application cryptographique à un support de données portatif (10), notamment pour un procédé EC.

**6.** Produit de programme informatique comprenant des instructions de programme destinées à faire en sorte qu'un microcontrôleur (12) mette en oeuvre un procédé présentant les caractéristiques de l'une quelconque des revendications 1 à 5.

7. Support de données portatif (10), notamment carte à puce ou module à puce, conçu pour mettre en oeuvre un procédé présentant les caractéristiques de l'une quelconque des revendications 1 à 5.

Fig. 1

START

U := fu + 1    V := fv    — 30

SOLANGE  V ≥ f + v    — 32

(U, V) := (V, U mod V)    — 34

V > f - v

JA          NEIN    — 36

38 — ERGEBNIS
V - f          FEHLER — 40

ENDE

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5961578 A

**In der Beschreibung aufgeführte Nicht-Patentliteratur**

- **D. E. KNUTH.** The Art of Computer Programming. Addison-Wesley, 1997, vol. 2